Europäisches Patentamt

European Patent Office

Office européen des brevets

(19)

(11) Veröffentlichungsnummer: **0 399 195**
**A1**

## (12) EUROPÄISCHE PATENTANMELDUNG

(21) Anmeldenummer: 90106833.8

(22) Anmeldetag: **10.04.90**

(51) Int. Cl.⁵: **B65B 57/00, F16P 3/14**

Die Bezeichnung der Erfindung wurde geändert (Richtlinien für die Prüfung im EPA, A-III, 7.3).

(30) Priorität: **02.05.89 DE 8905501 U**

(43) Veröffentlichungstag der Anmeldung:
**28.11.90 Patentblatt 90/48**

(84) Benannte Vertragsstaaten:
**AT BE CH DE ES FR GB IT LI NL SE**

(71) Anmelder: **TECHNOPACK EWALD HAGEDORN KG (GMBH & CO)**
**Otto-Hahn-Strasse 5**
**D-2056 Glinde(DE)**

(72) Erfinder: **Simon, Dieter**
**Moorweg 6**
**D-2057 Reinbek(DE)**

(74) Vertreter: **Glawe, Delfs, Moll & Partner**
**Patentanwälte**
**Postfach 26 01 62 Liebherrstrasse 20**
**D-8000 München 26(DE)**

(54) **Schutzvorrichtung für Clipvorrichtungen.**

(57) Maschine zum Verschließen von Verpackungshüllen, insbesondere von Wursthüllen (7) im Strang mittels Biegeklammern. Damit ein manueller Eingriff in den Verschlußbereich (4) nicht zu Verletzungen führt, ist eine Schutzeinrichtung vorgesehen, die einerseits den Austritt der Verpackungshüllen gestattet, andererseits aber das Eindringen einer menschlichen Hand in den Gefahrenbereich erkennt und in einem solchen Fall die Maschine abschaltet. Dies wir dadurch erreicht, daß ein richtungsempfindlicher Sensor (10, 11, 12) vorgesehen ist, der unterschiedliche Signale im Falle einer in den Verschlußbereich (4) eindringenden Bewegung und im Falle einer diesen verlassenden Bewegung abgibt. Dieser Sensor wird zweckmäßigerweise von einem Lichtschrankenpaar gebildet.

## Maschine zum Verschließen von Verpackungshüllen, insbesondere Wursthüllen

Maschinen zum Verschließen von gefüllten Wursthüllen im fortlaufenden Strang weisen einen Verschlußbereich auf, in welchem der mit dem Verschluß zu versehende Bereich der Wursthülle abgequetscht und anschließend die Verschlußklammer gesetzt wird. Da diese Vorgänge unfallträchtig sind, muß dafür gesorgt werden, daß man während laufender Maschinen nicht in den Verschlußbereich greifen kann. Während man die Seite des Verschlußbereichs, auf der das Füllrohr und die meist endlose Wursthülle in den Verschlußbereich eintritt, im allgemeinen recht gut mechanisch abschirmen kann, ergeben sich Schwierigkeiten auf der anderen Seite, auf die die Wurst den Verschlußbereich verläßt. Weil die Wurstformate unterschiedlich sind, muß ein mechanischer Schutz eine Weite haben, die das Eindringen einer Hand nicht verhindern kann. Man hilft sich daher mit einem verhältnismäßig langen, käfigartigen Tunnel, durch den der fertige Strang die Maschine verläßt. Die Erfahrung hat aber gezeigt, daß diese Schutzeinrichtung von den Benutzern häufig vorschriftswidrig abgebaut wird, weil sie den Verschlußbereich optisch unter Kontrolle haben wollen und ggf. auch manuell eingreifen wollen. Diese Probleme treten bei Wurstherstellungsmaschinen zwar besonders ausgeprägt in Erscheinung, erstrecken sich aber auch auf analoge Packmaschinen für andere Gegenstände.

Der Erfindung liegt die Aufgabe zugrunde, eine Maschine der im Gattungsbegriff des Anspruchs 1 genannten Art zu schaffen, die zwar einen wirksamen Schutz vor Eingriff in den Verschlußbereich bietet, aber Einblick und Zugriff nicht verhindert.

Die erfindungsgemäße Lösung besteht in dem kennzeichnenden Merkmal des Anspruchs 1.

Sobald die Hand oder ein anderer Gegenstand in den Verschlußbereich eindringt oder sich diesem auf geringe Distanz nähert, stellt der Sensor, der zweckmäßigerweise von einem Lichtschrankenpaar gebildet ist, dies fest. Die an den Sensor angeschlossene Schaltung setzt daraufhin den Verschlußantrieb still. Unfallgefahr wird dadurch vermieden. Umgekehrt können die verschlossenen Würste oder sonstige Verpackungsgegenstände den Verschlußbereich verlassen, ohne daß dadurch der Betriebszustand beeinflußt wird.

Wenn der Antrieb durch die erfindungsgemäßte Anordnung abgeschaltet worden ist, kann er entweder dadurch wieder eingeschaltet werden, daß der Sensor die den Verschlußbereich verlassende Bewegung anzeigt, oder mittels eines besonderen Schalters, insbesondere des allgemein für das Einschalten der Maschine vorgesehenen Schalters.

Zwar ist es bekannt (DE-U 86 23 122), bei einer Verpackungsmaschine diejenigen Maschinenteile, in die nicht eingegriffen werden darf, durch Lichtschranken abzuschirmen. Dabei wird die Maschine stillgesetzt, sobald auch nur eine einzige dieser Lichtschranken unterbrochen ist. Jedoch wird nicht das Problem gelöst, wie der Schutz im Falle einer eindringenden Bewegung vereinbart werden kann mit der Zulässigkeit einer austretenden Bewegung.

Bekannt sind ferner Schutzeinrichtungen, die lediglich mechanisch wirken (DE-C 30 10 657).

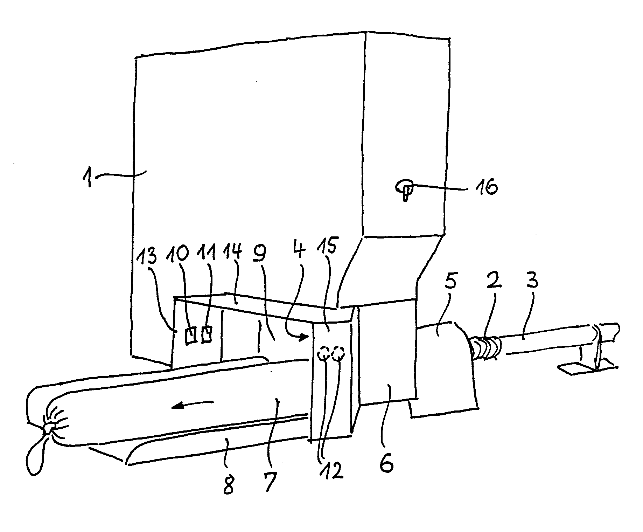

Die Erfindung wird im folgenden näher unter Bezugnahme auf die Zeichnung erläutert, die ein vorteilhaftes Ausführungsbeispiel in einer schematischen, perspektivischen Ansicht veranschaulicht.

Der Verschließmaschine 1 werden die Wursthülle 2 und das abzufüllende Brät mittels des Rohrs 3 in bekannter Weise zugeführt. Auf der Zuführungsseite ist der Zugriff zum Verschlußbereich 4 durch eine Haube 5 gesperrt. Auch von der Stirnseite her ist Zugriff nicht möglich dank der Verkleidung, die schematisch bei 6 angedeutet ist.

Auf der anderen Seite verlassen die verschlossenen Würste 7 den Verschlußbereich 4 in Pfeilrichtung auf einer Rutsche 8. Daneben und darüber verbleibt ein verhältnismäßig großer Öffnungsbereich 9, der erwünscht ist, um auch Würste größeren Kalibers oder Wurstringe herstellen zu können. Durch diesen Öffnungsbereich 9 ist Zugriff zum Verschlußbereich 4 möglich. Damit dies nicht zu Unfällen führt, sind mindestens zwei quer zur Wurstaustrittsrichtung bzw. Eindringrichtung hintereinander angeordnete Lichtschranken vorgesehen. Jede Lichtschranke besteht aus einem oder mehreren Licht-Sender-Empfängern 10, 11 und diesen gegenüber liegenden Spiegeln 12. Selbstverständlich könnten die Elemente 10, 11 auch lediglich Sender und die Elemente 12 Empfänger (oder umgekehrt) sein.

Die Maschine 1 enthält eine an die Lichtschranken 10 bis 12 angeschlossene Schaltung, die die von den Empfängern erhaltenen Signale logisch auswertet. Tritt ein Gegenstand aus dem Verschlußbereich 4 aus und wird demnach der Empfänger 11 vor dem Empfänger 10 angesprochen, so bleibt dies ohne Einfluß auf den Maschinenbetrieb. Wird jedoch der Empfänger 10 vor dem Empfänger 11 angesprochen, was einer in den Verschlußbereich eindringenden Bewegungsrichtung entspricht, so wird die Maschine stillgesetzt.

Abschirmbleche 13, 14, 15 bilden im Austrittsbereich aus dem Verschlußbereich 4 einen Weg, der so eingeengt ist, daß ein etwaiger Zugriff nicht ohne Unterbrechung der Lichtschranke möglich ist.

Dieser Weg verläuft im wesentlichen parallel zu der Austrittsrichtung der Wurst 7 und schließt insbesondere einen Zugriff von schräg oben hinter die Lichtschranke aus. Wenn der Austrittsbereich zu weit ist, um durch eine Lichtschranke gesichert werden zu können, können deren mehrere vorgesehen werden.

Falls die Maschine aufgrund eines Signals des Sensors 10, 11, 12 abgeschaltet wurde, muß sie über den Freigabeschalter 16 wieder in Funktion gesetzt werden.

## Ansprüche

1. Maschine zum Verschließen von Verpakkungshüllen, insbesondere von Wursthüllen im Strang mittels Biegeklammern, mit einer den Verschlußbereich abschirmenden Schutzeinrichtung, dadurch gekennzeichnet, daß die Schutzeinrichtung einen richtungsempfindlichen Sensor (10, 11, 12), der unterschiedliche Signale im Falle einer in den Verschlußbereich eindringenden Bewegung und im Falle einer diesen verlassenden Bewegung abgibt, und eine Schaltung umfaßt, die den Verschlußantrieb im Falle eines der eindringenden Bewegungen zugeordneten Signals abschaltet.

2. Maschine nach Anspruch 1, dadurch gekennzeichnet, daß der richtungsempfindliche Sensor von einem Lichtschrankenpaar (10, 11, 12) gebildet ist.

3. Maschine nach Anspruch 1, dadurch gekennzeichnet, daß der Zugangsweg zum Verschlußbereich auf eine im wesentlichen parallel zur normalen Austrittsrichtung des Produkts verlaufende Richtung beschränkt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | <u>DE - A1 - 2 424 979</u> (SCHNELL) * Gesamt * -- | 1 | B 65 B 57/00 F 16 P 3/14 |
| A | <u>DD - A - 40 242</u> (ARNOLD) * Anspruch 1 * -- | 1-3 | |
| A | <u>EP - A2 - 0 141 677</u> (FILCICH) * Seite 6, Zeilen 21-29; Ansprüche 1,2 * ---- | 1-3 | |

| RECHERCHIERTE SACHGEBIETE (Int. Cl.⁵) |
|---|
| A 22 C 11/00 B 65 B 51/00 B 65 B 57/00 F 16 P 3/00 |

Der vorliegende Recherchenbericht wurde für alle Patentansprüche erstellt.

| Recherchenort | Abschlußdatum der Recherche | Prüfer |
|---|---|---|
| WIEN | 11-07-1990 | MELZER |